# EUROPÄISCHE PATENTSCHRIFT

(11) **EP 2 065 317 B1**
(45) Veröffentlichungstag und Bekanntmachung des Hinweises auf die Patenterteilung: **17.06.2015**
(21) Anmeldenummer: 07121800.2
(22) Anmeldetag: 28.11.2007
(51) Int. Cl.: B65G 1/137, G06Q 10/08

(54) **Verfahren zum Einlagern von Arzneimittelpackungen**
Method for storing packets of medicine
Procédé destiné à stocker des emballages de médicaments

(43) Veröffentlichungstag der Anmeldung: 03.06.2009
(73) Patentinhaber: CareFusion Germany 326 GmbH, 53539 Kelberg (DE)
(72) Erfinder: Willems, Markus, 54990 Daun (DE); Wagner, Rudolf M., 54550 Daun (DE)
(74) Vertreter: Zenz Patentanwälte Partnerschaft mbB

(56) Entgegenhaltungen:
- EP-A- 0 562 573
- EP-A- 1 627 830
- DE-A1- 10 102 999
- DE-A1-102004 025 070
- DE-A1-102004 046 176

## Beschreibung

Die Erfindung betrifft ein Verfahren zum Einlagern von Arzneimittelpackungen in ein automatisiertes, nach einem chaotischen Lagerprinzip organisiertes Lager mit Lagerflächen aufweisenden Regalen oder Schächten, einer programmgesteuerten Steuereinrichtung und einem von der Steuereinrichtung gesteuerten Bediengerät zum Einlagern der Arzneimittelpackungen auf die Lagerflächen, bei dem die einzulagernden Arzneimittelpackungen identifiziert und vermessen werden, wobei Indentifizierungsinformationen und zugeordnete Vermessungsinformationen von der programmgesteuerten Steuereinrichtung erfasst und gespeichert werden, bei dem die einzulagernden Arzneimittelpackungen nach dem Identifizieren und Vermessen von einer von der Steuereinrichtung gesteuerten Transportvorrichtung in einen Zwischenspeicher des automatisierten Lagers derart transportiert werden, dass das Bediengerät auf die Arzneimittelpackungen zugreifen kann, und bei dem die Arzneimittelpackungen von dem Bediengerät aus dem Zwischenspeicher entnommen und in einen von der programmgesteuerten Steuereinrichtung ermittelten Lagerplatz eingelagert werden.

Ein derartiges Verfahren ist beispielsweise aus der DE 195 09 951 C2 bekannt. Die Druckschrift beschreibt ein automatisiertes, nach einem chaotischen Lagerprinzip organisiertes Lager mit Lagerflächen aufweisenden Regalen, wobei in einer zwischen zwei parallel einander gegenüberliegend angeordneten Regalen gebildeten Gasse ein Bediengerät zum Ein- und Auslagern von Arzneimittelpackungen auf die bzw. von den Regalböden angeordnet ist. Das Regalbediengerät wird von einer Steuereinheit gesteuert, die einen Datenspeicher aufweist, der für jede einliegende Arzneimittelpackung die vertikale Position des zugehörigen Regalbodens, die horizontale Position der gelagerten Arzneimittelpackung entlang der horizontalen Koordinate der Längserstreckung des Regalbodens und die Abmessung der eingelagerten Arzneimittelpackung in Richtung dieser horizontalen Koordinate speichert. Die einzelnen Arzneimittelpackungen werden durch einen bestimmten Arzneimittelcode identifiziert, der der Steuereinheit eingegeben wird. Die Arzneimittelpackung wird von Hand auf ein Förderband aufgelegt und durchläuft auf dem Band eine Messvorrichtung, die Abmessungen der Packung erfasst, woraufhin die Abmessungsinformationen den Identifizierungsinformationen der Packung zugeordnet werden. Zugleich mit dem Erfassen der Vermessungsinformationen wird in Abhängigkeit von diesen ein freier Lagerplatz auf einem Regalboden ausgesucht. Neu einzulagernde Arzneimittelpackungen gelangen, nachdem sie die Messvorrichtung durchlaufen haben, in einen Puffer, der durch das Förderband gebildet wird, wobei das Puffer-Förderband innerhalb des Regals zwischen zwei Regalböden verläuft. Auf das zwischen den Regalböden verlaufende Förderband hat das Bediengerät Zugriff. Das Bediengerät entnimmt die Arzneimittelpackungen von dem Förderband und lagert sie in den vorgesehenen freien Lagerplatz ein.

Zum Stand der Technik gehört auch der Kommissionierautomat "rowa classic" der Firma Rowa Automatisierungssysteme GmbH & Co. KG, in dem die in der oben genannten Patentschrift beschriebenen Grundprinzipien verwirklicht sind. Bei diesem Automaten wird eine einzulagernde Arzneimittelpackung zunächst durch Scannen eines auf der Arzneimittelpackung aufgedruckten Barcodes identifiziert und anschließend in einer vorgegebenen Ausrichtung auf ein Förderband aufgelegt. Auf dem Förderband durchläuft die Packung dann eine Messstation, in der Abmessungen erfasst werden. Unmittelbar nach Zuordnung der Abmessungen zu den dem Barcode entsprechenden Identifizierungsinformationen sucht die Steuereinheit einen geeigneten Lagerplatz in dem Regallager aus und weist eine Identifikation des Lagerplatzes dem die Identifizierungsinformationen enthaltenden Datensatz der Arzneimittelpackung zu. Anschließend wird die Arzneimittelpackung auf dem Förderband in den Greifbereich eines Bediengeräts transportiert, wobei das Förderband einen Einlagerungspuffer bildet. Da der Bediener die einzulagernde Packung auf das Förderband an einer vorgegebenen Stelle auflegt, und da die Bewegung des Förderbands von der Steuereinheit überwacht wird, hat die Steuereinheit für jede einzelne aufliegende Packung Kenntnis über den Lagerort auf dem Förderband, so dass das von der Steuereinheit gesteuerte Bediengerät gezielt auf die Packung zugreifen kann. Das Bediengerät entnimmt dann die Packungen von dem Förderband und transportiert sie zu dem vorab zugewiesenen Lagerplatz auf einem Regalboden. Bei dem bekannten Automaten werden die Lagerplätze auf den Regalböden den einzelnen Packungen in der Reihenfolge, in der die Packungen von dem Bediener gescannt und auf das Förderband aufgelegt werden, und unmittelbar nach dem Vermessen zugewiesen. Für jede der auf dem Förderband-Einlagerungspuffer aufliegenden Arzneimittelpackungen steht somit der Lagerplatz bereits fest, bevor die Packung sich in den Greifbereich des Bediengeräts bewegt. Eine Neuzuweisung der Lagerplätze ist dann nicht mehr möglich. Dies hat den Nachteil, dass beispielsweise dann, wenn einer ersten gescannten und vermessenen Packung ein Lagerplatz zugewiesen wurde, den sie nicht vollständig ausfüllt, und dann anschließend eine weitere Packung gescannt und vermessen wird, die diesen Lagerplatz besser ausgefüllt hätte, die zweite Packung nicht mehr dem ersten Lagerplatz, sondern lediglich einem weiteren, zweiten Lagerplatz zugewiesen werden kann. Ein Tauschen der Lagerplätze ist nicht mehr möglich. Üblicherweise entnimmt dann das Bediengerät die Arzneimittelpackungen von dem Förderband auch in der Reihenfolge, in der sie aufgelegt wurden, so dass das Förderband praktisch einen First-in-First-out-Puffer bildet. Bei der bekannten Ausführungsform ist es daneben noch möglich, irgendeine auf dem Förderband-Puffer aufliegende Arzneimittelpackung abweichend von der Einlagerungsreihenfolge von dem Bediengerät entnehmen und zu einem Ausgabeplatz befördern zu lassen, sofern die sofortige Entnahme einer derartigen Arzneimittelpackung gewünscht wird.

Aus der Anmeldungsveröffentlichung EP 1 627 830 A1 ist ein Verfahren zum Einlagern von Gegenständen in Regale bekannt, bei dem die Gegenstände einzeln auf einem Förderband herantransportiert werden, dann vermessen werden, wobei gleichzeitig eine Identifikation (z. B. Barcode) erfasst wird, und ihnen dann aufgrund ihrer Abmessungen ein endgültiger Lagerort in einem der Regale zugewiesen wird. Die Regale sind in mehreren Gassen angeordnet, wobei jeder Gasse eine separate Einlagerungsvorrichtung, eine Gruppierungsstation (Sammelstation) und eine Ladestation zugeordnet sind. Die für die Einlagerung in die jeweiligen Regale einer Regalgasse vorgesehenen Stückgüter werden zunächst in der Gruppierungsstation gesammelt, bis ein der Regaltiefe entsprechender Stapel hintereinander angeordneter Stückgüter vorliegt. Dieser Stapel der hintereinander liegenden Stückgüter wird dann in die Ladestation verschoben, dort insgesamt von dem Bediengerät ergriffen und auf einen Regalboden eingelagert. In die Regale der verschiedenen Regalgassen werden jeweils Stückgüter einer bestimmten Höhenklasse eingelagert, so dass in den Gruppierungsstationen jeweils Stückgüter einer Höhenklasse (Gruppe) angesammelt werden. Eine Steuereinrichtung verfolgt sowohl die einzelnen Positionen der Artikel in den Regalen als auch in den Gruppierungsstationen, so dass die Steuereinrichtung dafür sorgt, dass ein einzulagernder Artikel in die Position der Gruppierungsstation eingeschoben wird, die seinem späteren Lagerort in dem entsprechenden Regalfach entspricht. Bei der Auswahl des Lagerorts durch die Steuereinrichtung werden allerdings nur die Abmessungen der jeweils einzulagernden Packung und die Gesamtmenge der zur Verfügung stehenden Lagerflächen berücksichtigt. Eine Optimierung der Zuordnung mehrerer einzulagernder Stückgüter zu mehreren zur Verfügung stehenden Lagerplätzen nach Erfassung der Abmessungen einer Gruppe derartiger Stückgüter findet jedoch nicht statt.

Aus der Offenlegungsschrift DE 10 2004 025 070 A1 ist ebenfalls ein Verfahren zum Einlagern quaderförmiger Packungseinheiten bekannt, die in virtuellen Kanälen auf Regalböden abgelegt werden. Auch dort werden in einem Zwischenlager mehrere hintereinander liegende Stückgüter angesammelt, die dann insgesamt in den virtuellen Kanal des Regalbodens eingelagert werden. Auch hier findet die Zuordnung der Lagerplätze bereits statt, wenn das Stückgut in den Zwischenspeicher zwischengelagert wird.

Aufgabe der Erfindung ist es, bei einem Lager der eingangs genannten Art das Einlagerungsverfahren derart zu verbessern, dass eine verbesserte Raumausnutzung und/oder eine bessere Berücksichtigung verschiedener Eigenschaften einzulagernder Arzneimittelpackungen bei der Wahl der Lagerplätze für diese Packungen ermöglicht wird.

Diese Aufgabe wird erfindungsgemäß durch ein Verfahren zum Einlagern von Arzneimittelpackungen mit den Merkmalen des Anspruchs 1 gelöst. Bei diesem Verfahren zum Einlagern von Arzneimittelpackungen in ein automatisiertes, nach einem chaotischen Lagerprinzip organisiertes Lager mit Lagerflächen aufweisenden Regalen oder Schächten, einer programmgesteuerten Steuereinrichtung und einem von der Steuereinrichtung gesteuerten Bediengerät zum Einlagern der Arzneimittelpackungen auf die Lagerflächen werden zunächst die einzulagernden Arzneimittelpackungen identifiziert und vermessen, wobei Identifizierungsinformationen und zugeordnete Vermessungsinformationen von der programmgesteuerten Steuereinrichtung erfasst und gespeichert werden. Eine Gruppe einzulagernder Arzneimittelpackungen wird nach dem Identifizieren und Vermessen von einer von der Steuereinrichtung gesteuerten Transportvorrichtung in einen Zwischenspeicher des automatisierten Lagers derart transportiert, dass die Steuereinrichtung Kenntnis von den Lagerorten jeder einzelnen Arzneimittelpackung der Gruppe in dem Zwischenspeicher hat, so dass das Bediengerät auf jede Arzneimittelpackung zugreifen kann. Erst anschließend wird von der programmgesteuerten Steuereinrichtung für jede Arzneimittelpackung der Gruppe ein optimaler Lagerplatz auf einer Lagerfläche in dem Lager unter Berücksichtigung der für die Gruppe von Arzneimittelpackungen erfassten Vermessungsinformationen ermittelt und die Arzneimittelpackung von dem Bediengerät aus dem Zwischenspeicher entnommen und in den jeweils ermittelten Lagerplatz eingelagert. Dies bedeutet, dass die vorgesehenen Lagerplätze nicht - wie im Stand der Technik üblich - gleich nach der Identifizierung und Vermessung für jede einzelne Packung berechnet und zugewiesen werden, sondern zunächst abgewartet wird, bis eine Gruppe von mehreren Arzneimittelpackungen in dem Zwischenspeicher, beispielsweise auf dem Förderband, einliegt. Erst bei Kenntnis der Vermessungsinformationen der mehreren Arzneimittelpackungen werden in Abhängigkeit von diesen die mehreren optimalen Lagerplätze berechnet. Dieses Vorgehen birgt ein höheres Raumoptimierungspotential, da beispielsweise zunächst ein Lagerplatz für eine erst später in den Zwischenspeicher eingelagerte Packung festgelegt werden kann, sofern sich diese Packung für den Lagerplatz besser eignet als eine zuvor in den Zwischenspeicher eingegebene Packung. Außerdem ist es möglich, eine breitere Lücke in einem Regal, die möglicherweise bei der herkömmlichen Vorgehensweise nicht belegt würde, weil sie für jede einzelne der einzulagernden Packungen zu breit ist und daneben schmalere Lücken zur Verfügung stehen, bei der erfindungsgemäßen Vorgehensweise mit beispielsweise zwei Packungen aus dem Zwischenspeicher zu belegen, die zusammen breit genug sind, um die Lücke optimal zu füllen. Eine zur Verfügung stehende Gruppe von mehreren einzulagernden Arzneimittelpackungen kann auf optimale Weise auf eine Menge freier Lagerplätze verteilt werden. Darüber hinaus bietet die erfindungsgemäße Vorgehensweise die Möglichkeit, auch Packungen in den Zwischenspeicher aufzunehmen, für die zunächst zum Zeitpunkt des Vermessens noch kein passender Lagerplatz zur Verfügung steht. Da die Zuweisung der optimalen Lagerplätze erst später erfolgt, wenn die Gruppe in dem Zwischenspeicher einliegt, besteht eine erhöhte Wahrscheinlichkeit, dass ein geeigneter Lagerplatz durch Entnahme und Auslagerung von Packungen inzwischen frei geworden ist.

Es ist auch denkbar, dass eine im Zwischenspeicher einliegende Packung, für die (noch) kein optimaler Lagerplatz gefunden werden kann, im Zwischenspeicher belassen wird und später eingelagert oder wieder ausgelagert wird.

Schließlich ist es bei einer bevorzugten Ausführungsform (wie bereits im oben genannten Stand der Technik des "rowa classic") möglich, eine beliebige Packung dann aus dem Zwischenspeicher direkt auszulagern, wenn die Packung vor ihrer Einlagerung in den optimalen Lagerplatz bereits wieder angefordert wird (zur Ausgabe an einen Kunden). In diesem Fall könnten bei dem erfindungsgemäßen Verfahren sofort neue optimale Lagerplätze für die im Zwischenspeicher verbliebenen Packungen berechnet werden, wobei das Freiwerden des für die ausgelagerte Packung ursprünglich vorgesehenen optimalen Lagerplatzes berücksichtigt werden kann.

Die erfindungsgemäß vorgeschlagene Vorgehensweise führt zwar zu einem höheren Berechnungsaufwand, das heißt einer komplizierteren Optimierungssoftware, und kann in Bezug auf eine einzelne Packung zu einer längeren Einlagerungszeit führen. Dieser Nachteil wird aber durch die verbesserte raumoptimale Einlagerung und weitere, nachfolgend erörterte Vorteile, wettgemacht. Keine längeren Einlagerungszeiten ergeben sich jedoch gegenüber der gegenwärtig praktisch realisierten Vorgehensweise (des "rowa classic") bei der nach dem Vermessen und dem darauffolgenden Zuweisen des Lagerplatzes der einzelnen Packungen mit deren Entnahme aus dem Bandpuffer gewartet wird, bis der Bandpuffer mit Packungen gefüllt ist.

Der erfindungsgemäße Vorschlag stellt sich bewusst der in der Druckschrift EP 0 620 528 B2 vorgeschlagenen Lehre entgegen, die vermessenen und identifizierten Arzneimittelpackungen direkt, also ohne Zwischenlagerung in einem Zwischenspeicher, in das Regal einzulagern. Unter Inkaufnahme der in dieser Druckschrift genannten Nachteile des Zwischenlagers werden die Stückgüter nicht direkt, sondern zunächst in den Zwischenspeicher eingelagert, um auf diese Weise die Vorteile einer besseren Lagerplatzausnutzung und weitere Vorteile zu erreichen. Die Arzneimittelpackungen werden insbesondere nicht mehr in der Reihenfolge ihrer Vermessung in die Regallagerplätze eingelagert, sondern in einer davon abweichenden Reihenfolge, was durch einen wahlfreien Zugriff des Bediengeräts auf die im Zwischenspeicher einliegenden Packungen ermöglicht wird.

Bei einer Ausführungsform des erfindungsgemäßen Verfahrens wird zunächst von der programmgesteuerten Steuereinrichtung für jede Arzneimittelpackung der Gruppe der in dem Zwischenspeicher einliegenden Arzneimittelpackungen ein optimaler Lagerplatz auf einer Lagerfläche in dem Lager ermittelt; erst anschließend werden die Arzneimittelpackungen von dem Bediengerät aus dem Zwischenspeicher entnommen und in den jeweils ermittelten Lagerplatz eingelagert. Bei einer alternativen Variante wird zunächst anhand der erfassten Vermessungsinformationen für die Arzneimittelpackungen der Gruppe ein optimaler Lagerplatz für eine erste Arzneimittelpackung der Gruppe ermittelt und beginnt die Einlagerung der ersten Arzneimittelpackung der Gruppe durch das Bediengerät in ihrem optimalen Lagerplatz bereits, bevor die Ermittlung der optimalen Lagerplätze für sämtliche Arzneimittelpackungen der Gruppe abgeschlossen ist. Das Berechnungsprogramm zur Ermittlung der optimalen Lagerplätze läuft somit für nachfolgende Packungen der Gruppe noch, während - überlappend - bereits erste Packungen der Gruppe entnommen und eingelagert werden. Dies verkürzt die durchschnittliche Einlagerungszeit.

Eine bevorzugte Weiterbildung des erfindungsgemäßen Verfahren ist dadurch gekennzeichnet, dass eine Auswahl des optimalen Lagerplatzes für eine gegebene Arzneimittelpackung unter verschiedenen möglichen (d.h. freien und geeigneten) Lagerplätzen unter anderem von einer Minimierung des Fahrwegs des Bediengeräts unter Berücksichtigung des Lagerorts der Arzneimittelpackung im Zwischenspeicher abhängt. Wenn sich beispielsweise der Zwischenspeicher in Form eines Förderbands entlang des Regals erstreckt, sich mehrere Arzneimittelpackungen gleicher Abmessungen an verschiedenen Positionen auf dem Förderband befinden und darüber hinaus wenigstens ebenso viele freie Lagerplätze, die für diese Packungsabmessungen geeignet sind, über das Regal verteilt zur Verfügung stehen, so würde das Bediengerät die verschiedenen gleich großen Packungen aus dem Zwischenspeicher jeweils in denjenigen Lagerplatz einlagern, der den geringeren Abstand vom Lagerort im Zwischenspeicher hat. Diese Minimierung des Fahrwegs erhöht wiederum die Einlagerungsgeschwindigkeit.

Eine andere Ausführungsform ist dadurch gekennzeichnet, dass eine Auswahl der optimalen Lagerplätze unter Berücksichtigung einer gewünschten Gruppierung vorgegebener Arten von Arzneimittelpackungen in vorgegebenen Bereichen des Lagers getroffen wird. Tritt beispielsweise der Fall ein, dass für eine gegebene Arzneimittelpackung in dem Regallager mehrere geeignete Lagerplätze festgestellt werden, so könnte beispielsweise derjenige Lagerplatz als optimaler Lagerplatz ausgewählt werden, der benachbart zu Lagerplätzen angeordnet ist, in denen bereits gleichartige Arzneimittelpackungen eingelagert sind. Dadurch ergibt sich eine bevorzugte Nebeneinander-Anhäufung gleichartiger Arzneimittelpackungen bei gleichzeitig optimaler Lagerplatzbelegung. Eine solche Anhäufung ermöglicht dann eine schnellere Auslagerung, wenn beispielsweise gleichzeitig mehrere dieser gleichartigen Packungen zur Auslagerung angefordert werden. Dies ist beispielsweise dann möglich, wenn diese Anhäufung gleichartiger Arzneimittelpackungen an einer Stelle vorgenommen wird, wo Vorkehrungen dafür getroffen sind, dass eine Gruppe gleichartiger Arzneimittelpackungen durch eine einzige Bediengerätbewegung ausgelagert werden kann. Dies ist beispielsweise bei der Zusatzvorrichtung "Rowa Express" der Firma Rowa Automatisierungssysteme GmbH & Co. KG der Fall, wo derartige Lagerplätze für Anhäufungen gleichartiger Arzneimittelpackungen benachbart zu einem senkrechten Schacht angeordnet sind, in dem ein Lift-Tablar auf und ab bewegt werden kann. Dort kann eine Anhäufung benachbart zu dem senkrechten Schacht angeordneter Arzneimittelpackungen mit Hilfe des Bediengeräts auf den Lift-Tablar geschoben und dann mit Hilfe des Lifts zu einem Ausgabeplatz bewegt werden.

Bei dem erfindungsgemäßen Verfahren entspricht die Reihenfolge der Entnahme der Arzneimittelpackungen aus dem Zwischenspeicher grundsätzlich nicht der Reihenfolge ihrer Einlagerung in den Zwischenspeicher. Bei einer Ausführungsform entspricht die Reihenfolge der Entnahme der Arzneimittelpackungen aus dem Zwischenspeicher derjenigen Reihenfolge, in der die Ermittlung der optimalen Lagerplätze abgeschlossen wird. Immer dann, wenn für eine in dem Zwischenspeicher einliegende Arzneimittelpackung der optimale Lagerplatz ermittelt worden ist, wird diese Packung zur Entnahme freigegeben, wobei das Bediengerät dann die Packungen aus dem Zwischenspeicher in der Reihenfolge entnimmt. Bei einer alternativen Ausführungsform werden diejenigen Arzneimittelpackungen aus dem Zwischenspeicher zuerst entnommen, die bevorzugt einzulagern sind. Dies sind beispielsweise diejenigen Arzneimittelpackungen, die in einem gekühlten Lagerbereich des Lagers zu lagern sind. Dies hat den Vorteil, dass sowohl nicht zu kühlende als auch zu kühlende Arzneimittelpackungen gemischt in einer beliebigen Reihenfolge in den Zwischenspeicher eingelagert werden können, wonach die Einlagerung in die Regallagerplätze die zu kühlenden Packungen bevorzugt.

Die Gruppe einzulagernder Arzneimittelpackungen, die in den Zwischenspeicher transportiert wird, umfasst bei dem erfindungsgemäßen Verfahren vorzugsweise wenigstens drei Arzneimittelpackungen und überschreitet eine Maximalanzahl nicht. Diese Maximalanzahl kann sich aus Software-Beschränkungen ergeben, um die Optimierungsrechnung zu vereinfachen. Eine untere Grenze, von beispielsweise drei Arzneimittelpackungen kann sich daraus ergeben, dass bei einer geringeren Anzahl eine erfindungsgemäße Optimierung der Lagerplatzzuweisung zur Vereinfachung unterbleiben kann.

Die Steuereinrichtung benötigt selbstverständlich Informationen darüber, welche einzulagernden Arzneimittelpackungen in dem Zwischenspeicher einer Gruppe angehören und wann beispielsweise die letzte Packung der Gruppe in den Zwischenspeicher aufgenommen worden ist. Erst dann, wenn die letzte Packung einer Gruppe identifiziert und vermessen worden ist, kann die Steuereinrichtung mit der Zuweisung optimaler Lagerplätze beginnen. Die Information, dass die jeweils letzte Arzneimittelpackung einer Gruppe identifiziert und vermessen worden ist, kann die Steuereinrichtung auf unterschiedliche Weise erlangen. Beispielweise kann die Programmsteuerung so ausgebildet sein, dass nur dann, wenn eine vorgegebene Anzahl von Packungen identifiziert und vermessen worden ist, mit der Zuweisung der optimalen Lagerplätze für diese vorgegebene Anzahl von Packungen (d.h. die Gruppe) begonnen wird. Für den weiteren Ablauf gibt es dann grundsätzlich zwei Möglichkeiten. Bei der ersten Möglichkeit werden zunächst sämtliche optimalen Lagerplätze der Gruppe der vorgegebenen Anzahl von Packungen ermittelt, bevor für eine nachfolgende Gruppe der gleichen Anzahl von Packungen die Berechnungen zur Zuweisung optimaler Lagerplätze neu beginnen. Bei einer zweiten Vorgehensweise wird immer dann, wenn der optimale Lagerplatz für eine Packung oder die optimalen Lagerplätze für eine vorgegebene Anzahl von Packungen der im Zwischenspeicher einliegenden Arzneimittelpackungen berechnet worden sind, eine nächste in den Zwischenspeicher einlaufende Arzneimittelpackung bzw. eine gleiche vorgegebene Anzahl nachfolgender Arzneimittelpackungen dynamisch in die Gruppe aufgenommen und in die Berechnungen der optimalen Lagerplätze einbezogen. Dies bedeutet beispielsweise, dass mit jeder neu identifizierten und vermessenen Arzneimittelpackung, die in den Zwischenspeicher einläuft, das Berechnungsverfahren zum Bestimmen des optimalen Lagerplatzes für sämtliche bereits einliegenden Packungen neu gestartet wird. Dies ist grundsätzlich machbar, weil die Dauer derartiger Berechnungen bei modernen Prozessoren regelmäßig geringer ist als die Dauer der mechanischen Bewegungsabläufe. Bei einer Ausführungsform für die Einlagerung einer Vielzahl von Packungen ist beispielsweise folgende Vorgehensweise denkbar. Zu Beginn, d.h. dann, wenn die ersten Packungen identifiziert und vermessen und in den Zwischenpuffer eingegeben werden, bilden die jeweils im Zwischenpuffer vorhandenen Packungen eine Gruppe im Sinne des erfindungsgemäßen Verfahrens. Die Gruppe besteht also zunächst aus der ersten Packung, dann der ersten und der zweiten Packung, dann der ersten bis dritten Packung, und so weiter, solange noch keine Packung vom Bediengerät aus dem Zwischenspeicher entnommen worden ist. Die Gruppe wächst an, solange die Eingabefrequenz in den Zwischenpuffer höher als die Entnahmefrequenz aus dem Zwischenpuffer ist. Nach jeder Eingabe einer neuen Packung in den Zwischenpuffer und nach jeder Entnahme einer Packung aus dem Zwischenpuffer wird die Gruppe neu definiert und die Optimierungsrechnung erneut durchgeführt. Um die Optimierung sinnvoll auszuführen, wird üblicherweise erst dann mit der Optimierungsrechnung und der Entnahme begonnen, wenn eine Mindestanzahl von Packungen in dem Zwischenpuffer eingelagert ist.

Ein anderes Ausführungsbeispiel des erfindungsgemäßen Verfahrens ist dadurch gekennzeichnet, dass eine Gruppe die im Zwischenspeicher im Greifbereich des Bediengeräts zur Verfügung stehende Lagerfläche vollständig belegt, sofern eine ausreichende Menge einzulagernder Arzneimittelpackungen bereitgestellt wird. Bei dieser Variante kann beispielsweise so vorgegangen werden, dass stets zunächst der gesamte Zwischenspeicher im Greifbereich des Bediengeräts gefüllt wird, bevor mit der Berechnung der optimalen Lagerplätze und der Entnahme der Packungen aus dem Zwischenspeicher begonnen wird. Sobald der Zwischenspeicher dann geleert ist, wird ggf. wiederholt der Zwischenspeicher mit den nachfolgenden Packungen vollständig belegt.

Bei noch einer anderen Ausführungsform könnte das Ende einer Gruppe, d.h. die Identifikation und Vermessung der letzten Packung einer Gruppe auch durch eine Eingabe des Bedieners angezeigt werden. In diesem Fall hängt die Größe der Gruppe, d.h. die Anzahl der zu einer Gruppe gehörenden Packungen, von der Wahl des Bedieners und zusätzlich ggf. von der Pufferkapazität ab.

Vorteilhafte und/oder bevorzugte Weiterbildungen der Erfindung sind in den Unteransprüchen gekennzeichnet.

Im Folgenden wird die Erfindung anhand eines in der Zeichnung dargestellten Ausführungsbeispiels näher beschrieben. In der Zeichnung zeigen:
Figur 1A und 1B ein Ablaufdiagramm einer Ausführungsform eines Verfahrens zum Befüllen des Zwischenspeichers; und
Figur 2 ein Ablaufdiagramm einer Ausführungsform eines Verfahrens zum Entnehmen von Packungen aus dem Zwischenspeicher.

Bei einer nachfolgend beschriebenen bevorzugten Ausführungsform eines Verfahrens zum Einlagern von Arzneimittelpackungen in ein automatisiertes, nach einem chaotischen Lagerprinzip organisiertes Lager mit Lagerflächen aufweisenden Regalen oder Schächten, einer programmgesteuerten Steuereinrichtung und einem von der Steuereinrichtung gesteuerten Bediengerät zum Einlagern der Arzneimittelpackungen auf die Lagerflächen wird als Zwischenspeicher ein Förderband (Pufferband) verwendet, dass an einem Ende entweder teilweise manuell oder vollautomatisch befüllt wird und die aufliegenden Arzneimittelpackungen in einen Greifbereich eines Bediengeräts bewegt. Bei der beschriebenen Ausführungsform werden die Arzneimittelpackungen gruppenweise in den Zwischenspeicher gebracht und anschließend gruppenweise von dem Bediengerät entnommen, wobei die Reihenfolge der Entnahme der Gruppen (nicht die der Packungen) grundsätzlich der Reihenfolge ihrer Einlagerung entspricht. Eine Ausnahme könnte lediglich für solche Packungen einer Gruppe gelten, die aufgrund eines fehlenden geeigneten Lagerplatzes (noch) im Zwischenspeicher belassen werden, während bereits die nachfolgende Gruppe entnommen wird. Diese Packungen könnten dann der nachfolgenden Gruppe zugeordnet werden.

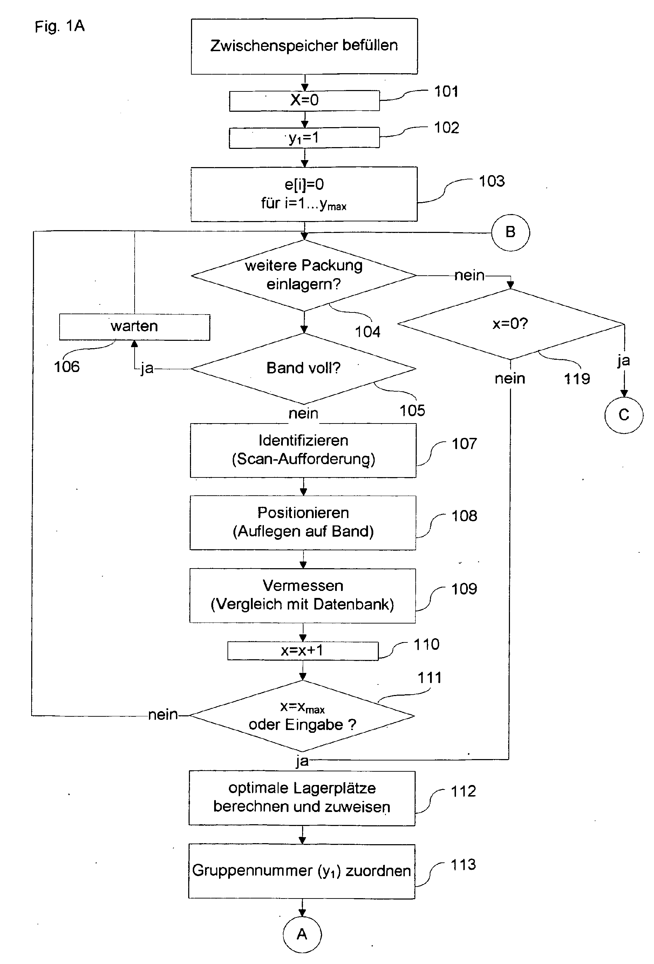

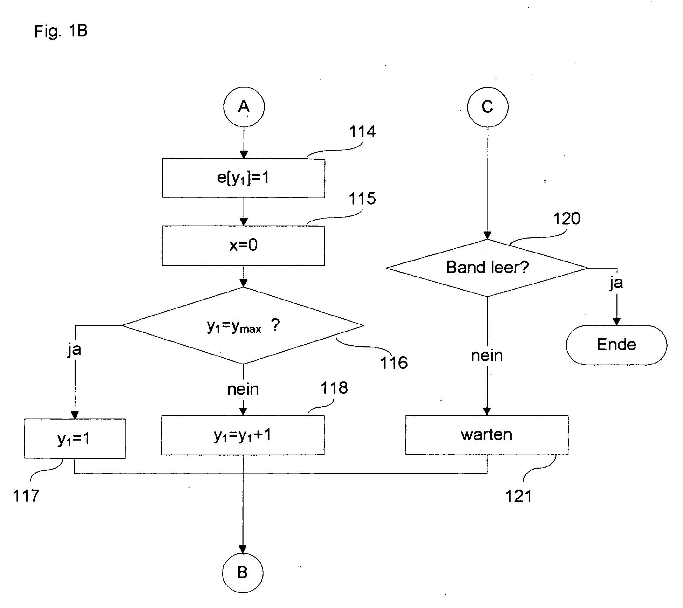

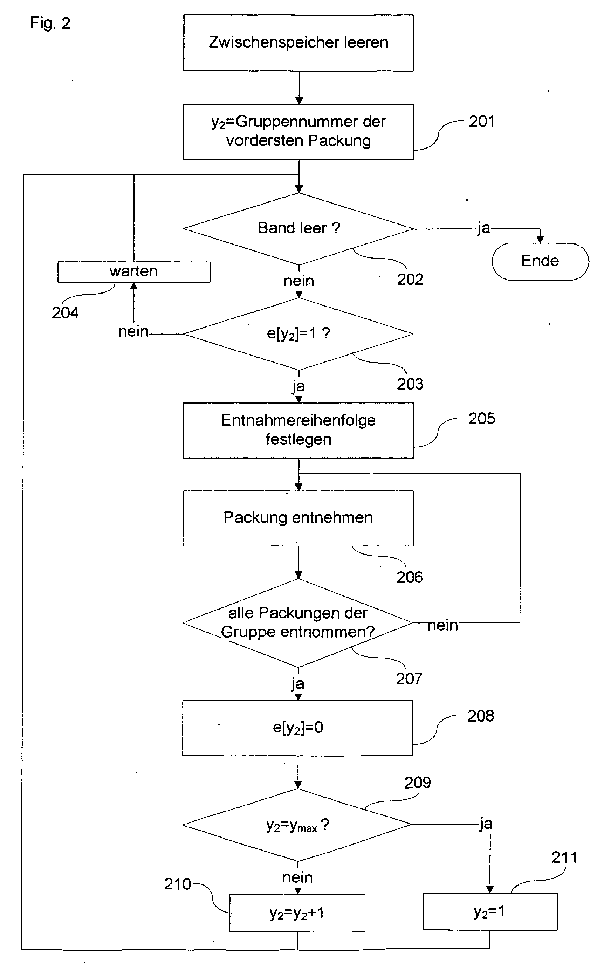

Bei der beschriebenen Ausführungsform wird das Pufferband nach einem in den Figuren 1A und 1B schematisch dargestellten Algorithmus befüllt und gemäß einem anhand der Figur 2 beschriebenen Algorithmus geleert. Das Verfahren des Befüllens des Pufferbands läuft weitgehend unabhängig von dem Verfahren des Leerens des Pufferbands durch das Bediengerät ab. Gekoppelt sind beide Algorithmen über gemeinsame Variablen, die für jede Gruppe eine Entnahmebereitschaft anzeigen. Daneben berücksichtigen die Verfahren selbstverständlich den Füllzustand des Pufferbands, das heißt, ob das Pufferband voll oder leer ist.

Der Steueralgorithmus beim Befüllen des Zwischenspeicher-Förderbands wird nachfolgend anhand der Figuren 1A und 1B beschrieben. Nach dem Start des Algorithmus werden verschiedene Variablen-Anfangswerte zugewiesen. Die Variable x zeigt die laufende Packungsnummer der gerade vermessenen Packungen an, die in eine Gruppe eingereiht werden. Diese Variable wird in Schritt 101 auf Null gesetzt. Die Variable y₁ zeigt die Gruppennummer der gerade in den Zwischenspeicher einzufüllenden Gruppe an. Die Variable y₁ wird im Schritt 102 auf Eins gesetzt. Die Variable e ist ein Vektor mit einer Anzahl von Feldern, die der Anzahl der von der Steuereinrichtung zur Verfügung gestellten Gruppennummern entspricht. Die maximale Gruppennummer yₘₐₓ wird in Abhängigkeit von folgenden Kriterien gewählt. In Abhängigkeit von der Anzahl und Größe der Arzneimittelpackungen, die einer Gruppe angehören können, können sich eine oder auch mehrere Gruppen gleichzeitig in dem Pufferspeicher befinden. Da jeder in dem Pufferspeicher befindlichen Gruppe eine eindeutige Gruppennummer zuzuordnen ist, muss die maximale Gruppennummer yₘₐₓ größer als die maximal in den Zwischenspeicher aufnehmbare Gruppenanzahl sein. Theoretisch könnte die maximale Gruppennummer beliebig groß sein, dies würde aber den Speicherplatz für den Vektor e[i] mit i = 1...yₘₐₓ zu groß werden lassen. Wenn beispielsweise bei einer vorgegebenen Minimalanzahl von Packungen pro Gruppe abgeschätzt wird, dass maximal 8 Gruppen in dem Zwischenspeicher Platz haben, so könnte beispielsweise die maximale Gruppennummer yₘₐₓ mit einem Sicherheitsabstand auf 10 festgelegt werden.

Die Vektorvariable e zeigt die Entnahmebereitschaft für jede Gruppennummer an, wobei ein Wert von Null entweder eine nicht vorhandene Gruppe oder eine noch nicht vollständig in den Zwischenspeicher aufgenommene Gruppe anzeigt und ein Wert von Eins anzeigt, dass die Gruppe vollständig im Zwischenspeicher vorhanden ist und zur Einlagerung der Packungen in die optimalen Lagerplätze entnommen werden kann. Im Schritt 103 wird somit sämtlichen Feldern des Vektors e der Wert Null zugewiesen.

Im Schritt 104 wird zunächst geprüft, ob (weitere) Packungen eingelagert werden sollen. Wenn diese Frage bejaht wird, wird im Schritt 105 zunächst geprüft, ob das Zwischenspeicher-Förderband voll ist. Wenn diese bejaht wird, wird im Schritt 106 eine vorgegebene Dauer gewartet, bevor zum Schritt 104 zurückgekehrt wird. Diese Schleife wird gegebenenfalls mehrfach wiederholt, bis eine zuvor eingelagerte Gruppe vollständig von dem Band entnommen worden ist, so dass das Band weitere Packungen einer nachfolgenden Gruppe aufnehmen kann. Wenn in dem Schritt 105 festgestellt wird, dass das Band nicht voll ist, so wird eine einzulagernde Packung im Schritt 107 identifiziert. Beispielsweise ergeht eine Aufforderung an den Bediener, die nächste Packung zu scannen, das heißt den Barcode von einem Barcode-Leser erfassen zu lassen. Anschließend wird die identifizierte Packung im Schritt 108 positioniert, das heißt, der Bediener wird aufgefordert, die Packung in einer vorgegebenen Ausrichtung an eine vorgegebene Stelle auf das Förderband aufzulegen. Anschließend wird die Packung im Schritt 109 vermessen, wobei dieses Vermessen beispielsweise das Erfassen der drei Abmessungen (Länge, Breite und Höhe) oder auch das Erfassen nur eines Teils dieser Abmessungen und den Vergleich der gemessenen Abmessungen mit Werten einer Datenbank, die Soll-Abmessungen in Zuordnung zu bestimmten Arzneimittelidentifikationen speichert, umfasst. Nachdem die Packung identifiziert und vermessen ist, wird die die laufende Packungsnummer anzeigende Variable x im Schritt 110 inkrementiert. Anschließend wird im Schritt 111 geprüft, ob die Nummer der gerade vermessenen Packung gleich einer vorgegebenen Maximalanzahl xₘₐₓ von Packungen einer Gruppe ist. Alternativ kann im Schritt 111 auch eine Eingabe des Bedieners abgefragt werden, mit der dieser den Abschluss einer Gruppe anzeigt. Sofern die Maximalanzahl noch nicht erreicht ist oder keine das Ende einer Gruppe anzeigende Eingabe eines Bedieners vorliegt, kehrt das Verfahren zum Schritt 104 zurück.

Wenn jedoch im Schritt 111 das Ende des Vermessens einer Gruppe von Packungen angezeigt wird, so werden im Schritt 112 aufgrund der erfassten Abmessungsinformationen der Arzneimittelpackungen der Gruppe optimale Lagerplätze berechnet und die die optimalen Lagerplätze identifizierenden Informationen den Datensätzen der einzelnen Packungen zugewiesen. Der Schritt 112 wird auch dann durchgeführt, wenn im Schritt 104 festgestellt wird, dass keine weitere Packung eingelagert werden soll, und im Schritt 119 festgestellt wird, dass die Variable x größer als Null ist, was bedeutet, dass bereits eine Anzahl von Packungen vermessen worden ist, aber die Maximalanzahl xₘₐₓ noch nicht erreicht worden ist.

Im Schritt 113 wird die aktuelle Gruppennummer y₁ den Datensätzen der vermessenen Arzneimittelpackungen, deren optimale Lagerplätze zugewiesen sind, zugeordnet.

Der weitere Ablauf ist Figur 1B zu entnehmen. Im Schritt 114 wird nunmehr das der laufenden Gruppennummer y₁ zugeordnete Feld des Entnahmebereitschafts-Vektors e auf Eins gesetzt. Dies zeigt an, dass die Gruppe mit der Nummer y₁ zur Entnahme ihrer Packungen von dem Pufferband durch das Bediengerät bereit ist. Im Schritt 115 wird die die laufende Packung einer Gruppe anzeigende Variable x wieder auf Null gesetzt. Im nachfolgenden Schritt 116 wird geprüft, ob die aktuelle Gruppennummer y₁ der maximalen Gruppennummer yₘₐₓ entspricht. Wenn dies der Fall ist, wird die Gruppennummer y₁ wieder auf Eins zurückgesetzt. Wenn dies nicht der Fall ist, wird die Gruppennummer y₁ inkrementiert. Anschließend kehrt das Verfahren zum Schritt 104 zurück.

Wenn im Schritt 104 festgestellt wird, dass keine weitere Packung eingelagert werden soll und daraufhin im Schritt 119 festgestellt wird, dass die Variable x den Wert Null hat, so bedeutet dies, dass nach dem Abschluss des Einlagerns einer Gruppe in den Zwischenspeicher, nachdem der Wert x im Schritt 115 auf Null gesetzt worden ist, keine weitere Packung eingelagert werden soll. Dann ist im Grunde genommen das Einlagerungsverfahren beendet. Bevor jedoch der Algorithmus an dieser Stelle verlassen wird, wird zunächst im Schritt 120 gefragt, ob das Band leer ist. Nur wenn dies der Fall ist, endet das Verfahren. Wenn das Band nicht leer ist, wird eine vorgegebene Zeitdauer gewartet (in Schritt 121), bevor das Verfahren erneut zum Schritt 104 zurückkehrt. Hier kann nun der Fall eintreten, dass das Verfahren die Schleife der Schritte 104, 119, 120 und 121 mehrfach durchläuft, ohne dass eine weitere Packung eingelagert werden soll, bis schließlich das Band aufgrund der Entnahme der Packungen leer ist und das Verfahren endet. Das Durchlaufen dieser Schleife hat folgenden Grund: Solange das Band nicht leergeräumt ist, darf das Verfahren zum Befüllen des Zwischenspeichers nicht beendet werden, weil der Fall eintreten kann, dass nach einem solchen vorläufigen Beenden des Befüllverfahrens der Bediener nach einer kurzen Pause sich dafür entscheidet, weitere Packungen in den Zwischenspeicher zu füllen, ohne dass der Zwischenspeicher schon leergeräumt worden wäre. Dann würde - bei einem Neubeginn des in den Figuren 1A und 1B dargestellten Verfahrens - der Algorithmus mit den Anfangswerten, insbesondere mit dem Anfangswert y₁ = 1 (Schritt 102) beginnen. Möglicherweise wäre aber noch eine zuvor eingelagerte Gruppe, die ebenfalls die Gruppennummer 1 erhalten hat, auf dem Förderband (zumindest anteilig). Dann würde es zu Kollisionen kommen. Aus diesem Grund beginnt das Verfahren gemäß den Figuren 1A und 1B stets nur dann neu, wenn das Band zuvor leergeräumt worden ist (was im Schritt 120 geprüft wird).

Figur 2 zeigt beispielhaft einen Algorithmus zum Leeren des Pufferbands, das heißt zur Entnahme der Arzneimittelpackungen von dem Pufferband. Die Variable y₂ bezeichnet die Gruppennummer derjenigen Gruppe, deren Arzneimittelpackungen gerade vom Förderband entnommen und in die bereits zuvor im Schritt 112 (siehe Figur 1A) berechneten und zugewiesenen optimalen Lagerplätze eingelagert werden sollen. Bei dem anhand der Figur 2 beschriebenen bevorzugten Ausführungsbeispiel soll die Entnahme mit derjenigen Gruppe beginnen, deren Packungen am längsten im Zwischenspeicher liegen, das heißt sich am weitesten in das Regallager hineinbewegt haben, somit die vordersten Positionen einnehmen. Deshalb wird im Schritt 201 die Variable y₂ auf die Gruppennummer der vordersten Packung gesetzt.

Anschließend wird im Schritt 202 geprüft, ob das Band leer ist. Beim ersten Durchlauf ist dies üblicherweise nicht der Fall. Es könnte jedoch der Fall eintreten, dass der Algorithmus gemäß Figur 2 bei einem leeren Band gestartet wird, dann würde im Schritt 201 keine Gruppennummer festgestellt werden können, wobei dieses Ergebnis in Schritt 202 zu der Feststellung des leeren Bandes führen könnte.

Wenn das Band nicht leer ist, wird zunächst im Schritt 203 geprüft, ob das die Entnahmebereitschaft anzeigende Feld des Vektors e für die aktuelle Gruppe mit der Nummer y₂ den Wert Eins enthält, der die Entnahmebereitschaft anzeigt. Dies könnte beispielsweise dann (noch) nicht der Fall sein, wenn die durch die Variable y₂ angezeigte Gruppe zugleich diejenige Gruppe ist, die gerade in den Zwischenspeicher gefüllt wird. Wenn der Wert e[y₂] keine Entnahmebereitschaft anzeigt, so wird in Schritt 204 eine vorgegebene Zeitdauer gewartet, bevor das Verfahren zum Schritt 202 zurückkehrt. Alternativ kann das Verfahren auch sogleich zum Schritt 203 zurückkehren. Wenn in Schritt 203 die Entnahmebereitschaft angezeigt wird (e[y₂]=1), wird der Algorithmus mit dem Schritt 205 fortgesetzt, in dem die Entnahmereihenfolge für die Packungen der aktuellen Gruppe festgelegt wird. Die Entnahmereihenfolge kann beispielsweise derjenigen Reihenfolge entsprechen, in der zuvor im Schritt 112 die optimalen Lagerplätze zugewiesen worden sind. Andererseits kann die Entnahmereihenfolge in Abhängigkeit von den erforderlichen Fahrwegen festgelegt werden, die das Bediengerät zurücklegen muss. Die Entnahmereihenfolge kann auch die bevorzugte Entnahme bestimmter Arzneimittelpackungen berücksichtigen. Nachdem im Schritt 205 die Entnahmereihenfolge für die aktuelle Gruppe festgelegt worden ist, werden die Packungen mit Hilfe des Bediengeräts entnommen (Schritt 206) und in ihre optimalen Lagerplätze eingelagert, bis im Schritt 207 festgestellt wird, dass sämtliche Packungen der Gruppe entnommen und in die optimalen Lagerplätze eingelagert worden sind. Wenn hier der Fall eintritt, dass eine Packung nicht entnommen werden kann, weil ihr (noch) kein Lagerplatz zugeordnet werden konnte, so könnte dieser Packung vor dem Schritt 207 eine neue Gruppennummer, nämlich die der nachfolgenden Gruppe, zugewiesen werden, bevor das Verfahren voranschreitet. Im Schritt 208 wird dann das zu der aktuellen Gruppe gehörende Feld des Entnahmebereitschaftsvektors e[y₂] wieder auf Null gesetzt. In den Schritten 209 bis 211 wird dann die Variable y₂, die die aktuelle zu entnehmende Gruppe anzeigt, inkrementiert oder, sofern sie bereits den Wert yₘₐₓ hatte, auf Eins gesetzt. Das Verfahren kehrt dann zum Schritt 202 zurück. Wenn keine weiteren Gruppen zu entnehmen sind, dass heißt, wenn im Schritt 202 festgestellt wird, dass das Band leer ist, so endet der Entnahmealgorithmus.

Im Rahmen des Erfindungsgedankens sind zahlreiche alternative Ausführungsformen denkbar. Beispielsweise könnten die Algorithmen zum Befüllen und zum Leeren des Zwischenspeichers, die hier anhand der Figur 1 beziehungsweise der Figur 2 entkoppelt dargestellt wurden, auch in einem einzigen Algorithmus vereint sein. Bei einer einfacheren Ausführungsform könnte eine Gruppe auch stets sämtliche Packungen eines vollständig gefüllten Zwischenspeichers umfassen. Denn befände sich stets nur eine Gruppe in dem Zwischenspeicher, die zunächst vollständig entnommen würde, bevor eine weitere Gruppe eingefüllt wird.

## Patentansprüche

1. Verfahren zum Einlagern von Arzneimittelpackungen in ein automatisiertes, nach einem chaotischen Lagerprinzip organisiertes Lager mit Lagerflächen aufweisenden Regalen oder Schächten, einer programmgesteuerten Steuereinrichtung und einem von der Steuereinrichtung gesteuerten Bediengerät zum Einlagern der Arzneimittelpackungen auf die Lagerflächen, wobei:
a) die einzulagernden Arzneimittelpackungen identifiziert (107) und vermessen (109) werden, wobei Identifizierungsinformationen und zugeordnete Vermessungsinformationen von der programmgesteuerten Steuereinrichtung erfasst und gespeichert werden,
b) eine Gruppe einzulagernder Arzneimittelpackungen nach dem Identifizieren und Vermessen von einer von der Steuereinrichtung gesteuerten Transportvorrichtung in einen Zwischenspeicher des automatisierten Lagers derart transportiert wird, dass die Steuereinrichtung Kenntnis von den Lagerorten jeder einzelnen Arzneimittelpackung der Gruppe in dem Zwischenspeicher hat, wobei die einzelnen Arzneimittelpackungen derart in dem Zwischenspeicher gelagert werden, dass das mit der Steuereinrichtung gekoppelte Bediengerät auf jede einzelne Arzneimittelpackung in Kenntnis ihres Lagerorts zugreifen kann, und
c) von der programmgesteuerten Steuereinrichtung für jede Arzneimittelpackung der Gruppe nach dem Einlagern der Gruppe in den Zwischenspeicher und vor dem Zugreifen des Bediengeräts auf die jeweilige Packung ein optimaler Lagerplatz auf einer Lagerfläche in dem Lager unter Berücksichtigung der im Schritt a) für die Gruppe von Arzneimittelpackungen erfassten Vermessungsinformationen ermittelt wird (111) und die jeweilige Arzneimittelpackung von dem Bediengerät aus dem Zwischenspeicher entnommen (206) und in den jeweils ermittelten Lagerplatz eingelagert wird.

2. Verfahren zum Einlagern von Arzneimittelpackungen nach Anspruch 1, **dadurch gekennzeichnet, dass** im Schritt c) zunächst von der programmgesteuerten Steuereinrichtung für jede Arzneimittelpackung der Gruppe ein optimaler Lagerplatz auf einer Lagerfläche in dem Lager ermittelt wird (111) und anschließend die Arzneimittelpackungen von dem Bediengerät aus dem Zwischenspeicher entnommen (206) und in den jeweils ermittelten Lagerplatz eingelagert werden.

3. Verfahren zum Einlagern von Arzneimittelpackungen nach Anspruch 1, **dadurch gekennzeichnet, dass** im Schritt c) zunächst wenigstens ein optimaler Lagerplatz für eine erste Arzneimittelpackung der Gruppe ermittelt wird und die Einlagerung der ersten Arzneimittelpackung der Gruppe durch das Bediengerät in ihren optimalen Lagerplatz bereits beginnt, bevor die Ermittlung der optimalen Lagerplätze für sämtliche Arzneimittelpackungen der Gruppe abgeschlossen ist.

4. Verfahren zum Einlagern von Arzneimittelpackungen nach einem der Ansprüche 1 bis 3, **dadurch gekennzeichnet, dass** eine Auswahl des optimalen Lagerplatzes für eine gegebene Arzneimittelpackung unter verschiedenen möglichen Lagerplätzen unter anderem von einer Minimierung des Fahrwegs des Bediengeräts unter Berücksichtigung des Lagerorts der Arzneimittelpackung im Zwischenspeicher abhängt.

5. Verfahren zum Einlagern von Arzneimittelpackungen nach einem der Ansprüche 1 bis 3, **dadurch gekennzeichnet, dass** eine Auswahl der optimalen Lagerplätze unter Berücksichtigung einer gewünschten Gruppierung vorgegebener Arten von Arzneimittelpackungen in vorgegebenen Bereichen des Lagers getroffen wird.

6. Verfahren zum Einlagern von Arzneimittelpackungen nach einem der Ansprüche 1 bis 5, **dadurch gekennzeichnet, dass** die Reihenfolge der Entnahme der Arzneimittelpackungen aus dem Zwischenspeicher der Reihenfolge entspricht, in der die Ermittlung der optimalen Lagerplätze abgeschlossen wird.

7. Verfahren zum Einlagern von Arzneimittelpackungen nach einem der Ansprüche 1 bis 5, **dadurch gekennzeichnet, dass** Arzneimittelpackungen, die bevorzugt einzulagern sind, zuerst aus dem Zwischenspeicher entnommen werden.

8. Verfahren zum Einlagern von Arzneimittelpackungen nach Anspruch 7, **dadurch gekennzeichnet, dass** in einem gekühlten Lagerbereich des Lagers zu lagernde Arzneimittelpackungen zuerst aus dem Zwischenspeicher entnommen werden.

9. Verfahren zum Einlagern von Arzneimittelpackungen nach einem der Ansprüche 1 bis 8, **dadurch gekennzeichnet, dass** die Anzahl (xₘₐₓ) der Arzneimittelpackungen einer Gruppe wenigstens drei Arzneimittelpackungen umfasst und eine Maximalanzahl nicht überschreitet.

10. Verfahren zum Einlagern von Arzneimittelpackungen nach Anspruch 9, **dadurch gekennzeichnet, dass** eine weitere Gruppe in den Zwischenspeicher transportiert wird, während die Arzneimittelpackungen der zuvor in den Zwischenspeicher transportierten Gruppe von dem Bediengerät in den jeweils ermittelten optimalen Lagerplatz eingelagert werden.

11. Verfahren zum Einlagern von Arzneimittelpackungen nach einem der Ansprüche 1 bis 8, **dadurch gekennzeichnet, dass** eine Gruppe die im Zwischenspeicher im Greifbereich des Bediengeräts zur Verfügung stehende Lagerfläche vollständig belegt, sofern eine ausreichende Menge einzulagernder Arzneimittelpackungen bereitgestellt wird.

12. Verfahren zum Einlagern von Arzneimittelpackungen nach einem der Ansprüche 1 bis 11, **dadurch gekennzeichnet, dass** der Zwischenspeicher ein Förderband umfasst, wobei das Förderband zugleich die Transportvorrichtung bildet, indem es sich von einer Station zum Vermessen und/oder Identifizieren der Arzneimittelpackungen bis in den Greifbereich des Bediengeräts erstreckt.

13. Verfahren zum Einlagern von Arzneimittelpackungen nach Anspruch 12, **dadurch gekennzeichnet, dass** das nach einem chaotischen Lagerprinzip organisierte Lager horizontale Lagerflächen auf übereinander angeordneten Regalböden aufweist und sich das Förderband parallel zu den Regalböden derart erstreckt, das der dem Bediengerät zugewandte Rand des Förderbands etwa in einer vertikalen Ebene mit den dem Bediengerät zugewandten Rändern der Regalböden liegt.

## Claims

1. A method for storing packets of medicine in an automated warehouse organised in accordance with a chaotic storage principle and comprising shelves or trays having storage areas, a program-controlled control device, and an operating unit controlled by the control device for storing the packets of medicine in the storage areas, wherein:
a) the packets of medicine to be stored are identified (107) and measured (109), wherein identification information and associated measurement information is detected and stored by the program-controlled control device,
b) a group of packets of medicine to be stored, following the identification and measurement, by a transport apparatus controlled by the control device is transported into a temporary store of the automated warehouse in such a way that the control device has knowledge of the storage locations of each individual packet of medicine of the group in the temporary store, wherein the individual packets of medicine are stored in the temporary store in such a way that the operating unit coupled to the control device can access each individual packet of medicine in the knowledge of the storage location thereof, and
c) following the storage of the group in the temporary store and prior to the access of the operating unit to the respective pack, an optimum storage place in a storage area in the warehouse is determined (111) by the program-controlled control device for each packet of medicine of the group under consideration of the measurement information detected in step a) for the group of packets of medicine, and the respective packet of medicine is removed (206) from the temporary store by the operating unit and is stored in the respective determined storage place.

2. The method for storing packets of medicine according to Claim 1, **characterised in that**, in step c), an optimal storage place in a storage area in the warehouse is first determined (111) by the program-controlled control device for each packet of medicine of the group, and the packets of medicine are then removed (206) from the temporary store by the operating unit and are stored in the respective determined storage place.

3. The method for storing packets of medicine according to Claim 1, **characterised in that**, in step c), an optimal storage place for a first packet of medicine of the group is first determined, and the storage of the first packet of medicine of the group in the optimal storage place thereof by the operating unit starts already before the determination of the optimal storage places for all packets of medicine of the group is complete.

4. The method for storing packets of medicine according to one of Claims 1 to 3, **characterised in that** a selection of the optimal storage place for a given packet of medicine from various possible storage places is dependent *inter alia* on a minimisation of the path of travel of the operating unit under consideration of the storage location of the packet of medicine in the temporary store.

5. The method for storing packets of medicine according to one of Claims 1 to 3, **characterised in that** a selection of the optimal storage spaces is made under consideration of a desired grouping of predefined types of packets of medicine in predefined areas of the warehouse.

6. The method for storing packets of medicine according to one of Claims 1 to 5, **characterised in that** the order of the removal of the packets of medicine from the temporary store corresponds to the order in which the determination of the optimal storage places was completed.

7. The method for storing packets of medicine according to one of Claims 1 to 5, **characterised in that** packets of medicine that are preferably to be stored are first removed from the temporary store.

8. The method for storing packets of medicine according to Claim 7, **characterised in that** packets of medicine to be stored in a cooled storage area of the warehouse are first removed from the temporary store.

9. The method for storing packets of medicine according to one of Claims 1 to 8, **characterised in that** the number (xₘₐₓ) of packets of medicine of a group comprises at least three packets of medicine and does not exceed a maximum number.

10. The method for storing packets of medicine according to Claim 9, **characterised in that** a further group is transported into the temporary store whilst the packets of medicine of the group transported previously into the temporary store are stored by the operating unit in the respective determined optimal storage place.

11. The method for storing packets of medicine according to one of Claims 1 to 8, **characterised in that** a group fully occupies the storage area available in the temporary store in the grab range of the operating unit provided a sufficient quantity of packets of medicine to be stored is provided.

12. The method for storing packets of medicine according to one of Claims 1 to 11, **characterised in that** the temporary store comprises a conveyor belt, wherein the conveyor belt simultaneously forms the transport apparatus **in that** it extends from a station for measuring and/or identifying the packets of medicine to the grab range of the operating unit.

13. The method for storing packets of medicine according to Claim 12, **characterised in that** the warehouse organised in accordance with a chaotic storage principle has horizontal storage areas on shelves arranged above one another and the conveyor belt extends parallel to the shelves, such that the edge of the conveyor belt facing the operating unit lies approximately in a vertical plane with the edges of the shelves facing the operating unit.

## Revendications

1. Procédé pour stocker des emballages de médicaments dans un magasin automatisé organisé selon le principe du stockage chaotique avec des étagères ou puits présentant des aires de stockage, un dispositif de commande contrôlé par programme et un appareil de manutention commandé par le dispositif de commande pour le stockage des emballages de médicaments sur les aires de stockage, dans lequel :
a) les emballages de médicaments à stocker sont identifiés (107) et mesurés (109), des informations d'identification et des informations de mesure associées étant collectées et enregistrées par le dispositif de commande contrôlé par programme,
b) après l'identification et la mesure, un groupe d'emballages de médicaments à stocker étant transporté par un dispositif de transport commandé par le dispositif de commande vers un magasin intermédiaire du magasin automatisé de manière à ce que le dispositif de commande ait connaissance des emplacements de stockage de chaque emballage de médicament individuel du groupe dans le magasin intermédiaire, dans lequel les emballages de médicaments individuels sont stockés dans le magasin intermédiaire de manière à ce que l'appareil de manutention couplé au dispositif de commande puisse saisir chaque emballage de médicament intermédiaire en connaissance de son emplacement de stockage, et
c) pour chaque emballage de médicament du groupe, après le stockage du groupe dans le magasin intermédiaire et avant la saisie de l'emballage individuel par l'appareil de manutention, le dispositif de commande contrôlé par programme déterminant (111) un emplacement de stockage optimal sur une aire de stockage dans le magasin en tenant compte des informations de mesure collectées à l'étape a) pour le groupe d'emballages de médicaments, et l'appareil de manutention prélevant l'emballage de médicament respectif du magasin intermédiaire (206) et le stockant à l'emplacement de stockage respectivement déterminé.

2. Procédé pour stocker des emballages de médicaments selon la revendication 1, **caractérisé en ce qu'**à l'étape c), le dispositif de commande contrôlé par programme détermine (111) tout d'abord, pour chaque emballage de médicament du groupe, un emplacement de stockage optimal sur une aire de stockage dans le magasin et **en ce qu'**ensuite, les emballages de médicaments sont prélevés (206) du magasin intermédiaire par l'appareil de manutention et sont stockés à l'emplacement de stockage respectivement déterminé.

3. Procédé pour stocker des emballages de médicaments selon la revendication 1, **caractérisé en ce qu'**à l'étape c), on détermine tout d'abord au moins un emplacement de stockage optimal pour un premier emballage de médicament du groupe, et **en ce que** le stockage du premier emballage de médicament du groupe à son emplacement de stockage optimal grâce à l'appareil de manutention commence dès avant la fin de la détermination des emplacements de stockage optimaux pour l'ensemble des emballages de médicaments du groupe.

4. Procédé pour stocker des emballages de médicaments selon l'une des revendications 1 à 3, **caractérisé en ce qu'**une sélection de l'emplacement de stockage optimal pour un emballage de médicament donné parmi différents emplacements de stockage possibles dépend entre autres d'une minimisation du trajet de l'appareil de manutention en tenant compte de l'emplacement de stockage de l'emballage de médicament dans le magasin intermédiaire.

5. Procédé pour stocker des emballages de médicaments selon l'une des revendications 1 à 3, **caractérisé en ce qu'**une sélection des emplacements de stockage optimaux est réalisée en tenant compte d'un regroupement souhaité de types prescrits d'emballages de médicaments dans des zones prescrites du magasin.

6. Procédé pour stocker des emballages de médicaments selon l'une des revendications 1 à 5, **caractérisé en ce que** l'ordre de prélèvement des emballages de médicaments du magasin intermédiaire correspond à l'ordre dans lequel la détermination des emplacements de stockage optimaux est achevée.

7. Procédé pour stocker des emballages de médicaments selon l'une des revendications 1 à 5, **caractérisé en ce que** l'on prélève tout d'abord du magasin intermédiaire des emballages de médicaments, lesquels doivent être stockés de manière privilégiée.

8. Procédé pour stocker des emballages de médicaments selon la revendication 7, **caractérisé en ce que** l'on prélève tout d'abord du magasin intermédiaire les emballages de médicaments à stocker dans une zone de stockage réfrigérée du magasin.

9. Procédé pour stocker des emballages de médicaments selon l'une des revendications 1 à 8, **caractérisé en ce que** le nombre (Xₘₐₓ) d'emballages de médicaments d'un groupe comprend au moins trois emballages de médicaments et ne dépasse pas un nombre maximal.

10. Procédé pour stocker des emballages de médicaments selon la revendication 9, **caractérisé en ce qu'**un autre groupe est transporté dans le magasin intermédiaire pendant que les emballages de médicaments du groupe précédemment transporté dans le magasin intermédiaire est stocké par l'appareil de manutention à l'emplacement de stockage optimal respectivement déterminé.

11. Procédé pour stocker des emballages de médicaments selon l'une des revendications 1 à 8, **caractérisé en ce qu'**un groupe occupe complètement l'aire de stockage, à portée de saisie de l'appareil de manutention, disponible dans le magasin intermédiaire dans la mesure où une quantité suffisante d'emballages de médicaments à stocker est mise à disposition.

12. Procédé pour stocker des emballages de médicaments selon l'une des revendications 1 à 11, **caractérisé en ce que** le magasin intermédiaire comprend une bande transporteuse, dans lequel la bande transporteuse forme simultanément le dispositif de transport **en ce qu'**elle s'étend depuis une station pour mesurer et/ou identifier les emballages de médicaments jusqu'à la zone de saisie de l'appareil de manutention.

13. Procédé pour stocker des emballages de médicaments selon la revendication 12, **caractérisé en ce que** le magasin organisé selon le principe du stockage chaotique présente des aires de stockage horizontales sur des tablettes de rayonnage disposées les unes au-dessus des autres, et **en ce que** la bande transporteuse s'étend parallèlement aux tablettes de rayonnage de manière à ce que le bord tourné vers l'appareil de manutention de la bande transporteuse se situe sensiblement dans un plan vertical avec les bords des tablettes de rayonnage tournés vers l'appareil de manutention.
